# EUROPÄISCHE PATENTSCHRIFT

(11) **EP 0 975 200 B1**
(45) Veröffentlichungstag und Bekanntmachung des Hinweises auf die Patenterteilung: **29.09.2004**
(21) Anmeldenummer: 99440204.8
(22) Anmeldetag: 16.07.1999
(51) Int. Cl.: H04Q 11/04, H04M 11/06, H04Q 3/60, H04Q 3/00

(54) **Anschlussverfahren und Konfiguration eines Teilnehmers**
Method for connection and configuration of a subscriber
Procédé de connexion et de configuration d'un abonné

(30) Priorität: 16.07.1998 DE 19831948
(43) Veröffentlichungstag der Anmeldung: 26.01.2000
(73) Patentinhaber: ALCATEL, 75008 Paris (FR)
(72) Erfinder: Legat, Karl-Heinz, 71272 Renningen (DE); Gamm, Bernhard, 70825 Korntal-Münchingen (DE); Rothenhöfer, Karl, 71229 Leonberg (DE)
(74) Vertreter: Brose, Gerhard, Dipl.-Ing.

(56) Entgegenhaltungen:
- EP-A- 0 817 512
- EP-A- 0 848 569
- WO-A-98/08320
- US-A- 5 574 783

## Beschreibung

Die Erfindung betrifft ein Verfahren zum Erreichen eines ersten Teilnehmers durch einen ersten Netzbetreiber, wenn dieser erste Teilnehmer über eine Anschlußleitung an einer Vermittlungsstelle eines zweiten Netzbetreibers angeschlossen ist, nach dem Oberbegriff des Anspruchs 1 und eine Anschlußkonfiguration im Teilnehmeranschlußbereich eines ersten und eines zweiten Netzbetreibers nach dem Oberbegriff des Anspruchs 2. Ein derartiges Verfahren ist aus der Patentschrift EP 0 817 512 bekannt.

Damit neue Netzbetreiber Teilnehmer erreichen können, müssen sie entweder eigene Anschlußverbindungen über Funk oder als Leitung einrichten oder sie müssen bestehende Anschlußleitungen verwenden, die sie aber nur über die Teilnehmervermittlungsstelle der bisherigen Netzbetreiber erreichen können.

Der Aufbau eigener Anschlußverbindungen ist nicht nur kostenträchtig, sondern auch zeitaufwendig. Andererseits sind für jede einzelne Leitung, die über einen anderen Netzbetreiber geschleif werden muß, Gebühren zu bezahlen.

Der Erfindung liegt die Aufgabe zugrunde, eine technische Lösung anzugeben, die schnell einsatzbereit ist und wenig Kosten verursacht.

Diese Aufgabe wird erfindungsgemäß gelöst durch ein Verfahren nach der Lehre des Anspruchs 1 und eine Anschlußkonfiguration nach der Lehre des Anspruchs 2.

Üblicherweise laufen bestehende Anschlußleitungen gebündelt bis zu einem Verteiler in der Nähe der Teilnehmer. Mit neueren Techniken können auch bestehende Anschlußleitungen so betrieben werden, daß ihre Kapazität für mehrere Teilnehmer ausreicht. Ein Beispiel hierfür findet sich in WO 98/08320.

Erfindungsgemäß wird nun von einem neuen Netzbetreiber eine Leitung über die Vermittlungsstelle eines bestehenden Netzbetreibers bis zu diesem Verteiler in der Nähe der Teilnehmer geschleift und mit einer solchen neuen Technik darüber die Verbindung für mehrere Teilnehmer geführt. Der Begriff des Netzbetreibers ist hier nicht zu eng zu sehen. So kann hier durchaus beispielsweise auch ein Betreiber eines ISDN-Netzes gesehen werden, der eine Reihe von Anschlüssen über eine analog betriebene Vermittlungsstelle führt, wobei der Betreiber des analogen Netzes und der des ISDN-Netzes identisch sein können.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt ein Ausführungsbeispiel einer erfindungsgemäßen Anschlußkonfiguration zur Durchführung des erfindungsgemäßen Verfahrens.
- Figur 2: zeigt ein Ausführungsbeispiel einer erfindungsgemäßen Netzabschlußeinheit, die auch auf Seiten der Vermittlungsstelle Verwendung finden kann.
- Figur 3: zeigt ein Beispiel für die Kanalzuordnung bei dem erfindungsgemäßen Verfahren.

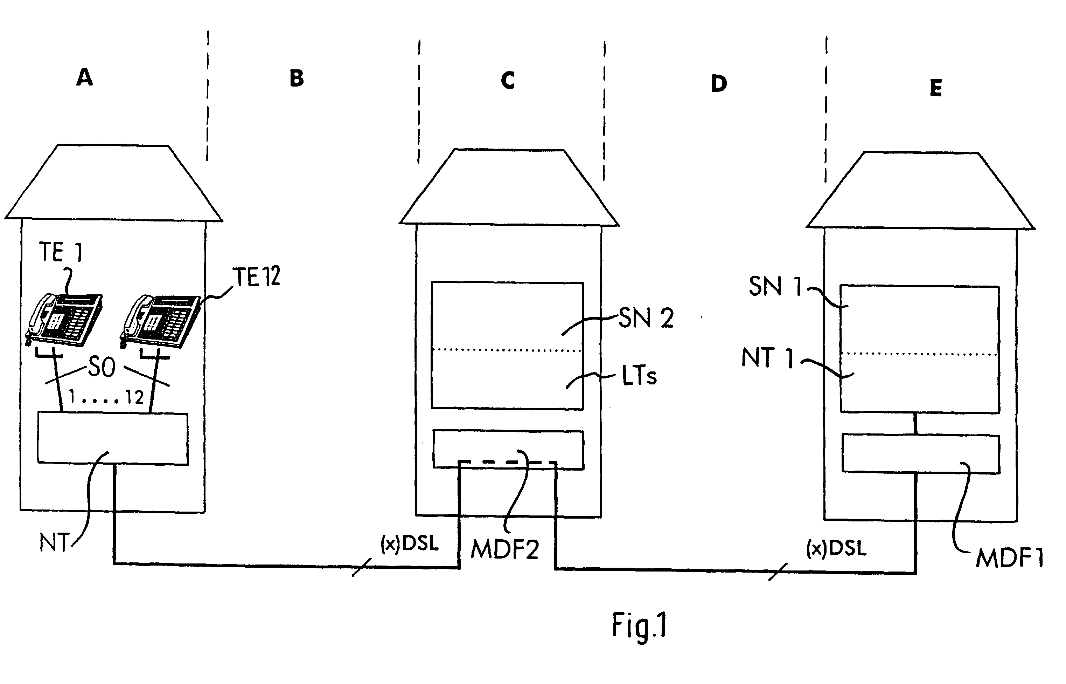

Anhand der Figur 1 wird zunächst die Situation beschrieben:

In der Figur 1 sind von links nach rechts fünf Bereiche A, B, C, D und E dargestellt. Der Bereich A ist der Bereich der Endteilnehmer. B ist ein Bereich, in dem ein, üblicherweise bereits bestehendes, Netz aus Kupferdoppeladern dem Anschluß von Endteilnehmern an eine Teilnehmervermittlungsstelle dient. Die Kupferdoppeladern sind in der Regel nicht einzeln verlegt, sondern in Kabeln, die jeweils ein ganzes Bündel solcher Kupferdoppeladern enthalten. Der Bereich C ist ein Bereich einer solchen Teilnehmervermittlungsstelle, bei der hier unterstellt wird, daß sie bereits existiert und daß bereits eine Vielzahl von Endteilnehmern angeschlossen ist. Diese Teilnehmervermittlungsstelle wird von einem Netzbetreiber betrieben, der hier als zweiter Netzbetreiber bezeichnet wird. Der Bereich D ist, wie der Bereich B, ein dem Anschluß von Endteilnehmern an eine Teilnehmervermittlungsstelle dienender Bereich mit Kupferdoppeladern. An einige dieser Kupferdoppeladern ist nun, im Bereich E, eine Teilnehmervermittlungsstelle angeschlossen, die von einem weiteren Netzbetreiber betrieben wird, der hier als erster Netzbetreiber bezeichnet wird. An dieser Stelle braucht nicht untersucht zu werden, inwieweit dieser erste Netzbetreiber auch rechtlich als Netzbetreiber anzusehen ist.

Im Bereich A, also dem Bereich der Endteilnehmer, sind stellvertretend zwei Sprachendgeräte TE1 und TE12, eine Netzabschlußeinheit NT (NT = Network Termination) und die in diesem Beispiel als ISDN-Basisanschlüsse ausgebildeten und mit S0 bezeichneten Anschlüsse der Sprachendgeräte an die Netzabschlußeinheit eingezeichnet. Es soll nicht ausgeschlossen werden, daß sich in räumlicher Nähe zu den hier gezeigten Sprachendgeräten und der hier gezeigten Netzabschlußeinheit noch weitere Endgeräte befinden können, die jedoch nicht Endgeräte von Teilnehmern sind, die Kunden des ersten Netzbetreibers sind. Anstelle von Sprachendgeräten können hier auch andere Endgeräte angeschlossen sein. Es soll auch nicht grundsätzlich ausgeschlossen werden, daß die Netzabschlußeinheit nur oder auch Anschlüsse für analoge Endgeräte aufweist.

Im Bereich B, der dem Anschluß von Endteilnehmern dient, ist, ebenso wie im Bereich D, jeweils eine Kupferdoppelader (ohne Bezugszeichen) angedeutet. Der erste Netzbetreiber ist dabei beim zweiten Netzbetreiber wie eine Vielzahl einzelner Endgeräte angeschlossen.

Im Bereich C ist eine Teilnehmervermittlungsstelle des zweiten Netzbetreibers dargestellt. Dargestellt ist hier ein Koppelnetz SN2 (SN = Switching Network), der Bereich LTs der Teilnehmeranschlußschaltungen (LT = Line Termination) und der Hauptverteiler MDF2 (MDF = Main Distribution Frame). Wichtig für die vorliegende Erfindung ist, daß der Hauptverteiler MDF2, jedenfalls für die von der Erfindung betroffenen Leitungen, keine Verbindung zum Koppelnetz SN2 und zu den Teilnehmeranschlußschaltungen LT aufweist. Im Hauptverteiler MDF2 werden ausschließlich Leitungen galvanisch miteinander verbunden, meist verlötet, gesteckt oder verschraubt.

Die Teilnehmervermittlungsstelle des ersten Netzbetreibers, die im Bereich E dargestellt ist, weist ebenfalls ein Koppelnetz SN1 und einen Hauptverteiler MDF1 auf. Teilnehmeranschlußschaltungen sind hier nicht dargestellt. Dagegen ist an derjenigen Stelle, an der beim zweiten Netzbetreiber die Teilnehmeranschlußschaltungen dargestellt sind, hier eine Netzabschlußeinheit NT1 wie im Bereich der Endteilnehmer dargestellt. Unabhängig von der vorliegenden Erfindung kann diese Teilnehmervermittlungsstelle auch noch übliche Teilnehmeranschlußschaltungen aufweisen.

Der Kern der Erfindung jedenfalls liegt darin, daß die räumlich auf den zweiten Netzbetreiber ausgerichteten und oft auch diesem gehörenden Leitungen dort nur galvanisch einander richtig zugeordnet und im übrigen im Multiplex für mehrere Teilnehmer gemeinsam betrieben werden.

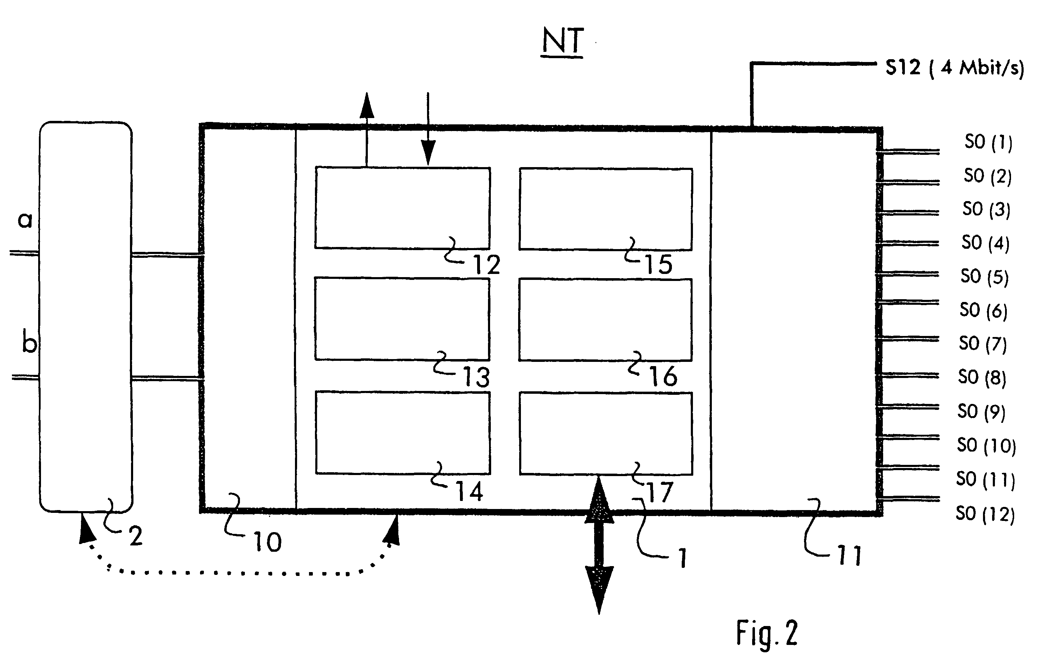

Anhand der Figur 2 wird nun beispielhaft eine Netzabschlußeinheit NT beschrieben, die sowohl auf der Teilnehmerseite, im Bereich A, als auch beim ersten Netzbetreiber, im Bereich E, Verwendung finden kann. Sie weist hierfür zwar Baugruppen auf, die jeweils nur auf einer der beiden Seiten, nicht jedoch auf der anderen Seite benötigt werden; häufig ist dies jedoch wirtschaftlicher als zwei weitgehend gleiche und nur in Details voneinander abweichende Produkte zu produzieren und vorzuhalten. Sollte es wirtschaftlich sinnvoller sein, so können die jeweils nicht benötigten Baugruppen auch weggelassen werden. Im vorliegend untersuchten Fall soll die gesamte Netzabschlußeinheit in einer hochintegrierten Schaltung (VLSI) zusammengefaßt werden.

Die beispielhaft gezeigte Netzabschlußeinheit NT weist eine Kernbaugruppe 1 und eine Versorgungsweiche 2 auf. Die Kernbaugruppe 1 enthält eine übertragungstechnische Einheit 10, eine Formatierungseinheit 11, eine Ein- und Ausgabeeinrichtung 12, eine Verschlüsselungseinrichtung 13, eine Stromversorgungseinrichtung 14, einen Programmspeicher 15, eine Steuereinrichtung 16 und eine weitere Schnittstelleneinrichtung 17.

Als Anschlüsse sind links die beiden Adern a und b einer Zweidrahtleitung, rechts zwölf mit S0(1) bis S0(12) bezeichnete zweiadrige ISDN-Basisanschlüsse und darüber hinaus ein systemspezifischer, mit S12(4Mbit/s) bezeichneter Summenanschluß und ein Busanschluß für die weitere Schnittstelleneinrichtung 17 eingezeichnet.

Hier ist auch schon ohne weiteres ersichtlich, daß nicht alle Einrichtungen und Anschlüsse zwingend zur Ausführung der Erfindung erforderlich sind.

Die Versorgungsweiche 2 dient der Fernspeisung und überlagert den Signalen auf der Zweidrahtleitung einen Gleichstrompfad. Die Versorgungsweiche 2 ist zu diesem Zweck mit der Stromversorgungseinrichtung 14 verbunden. Sie ist getrennt vom Rest gezeichnet, weil sie üblicherweise in einer anderen Technologie ausgeführt wird, als die der Signalverarbeitung dienenden Einrichtungen. An sich sind derartige Versorgungsweichen bekannt. Im Prinzip bilden sie im Signalpfad einen Hochpaß, im Gleichstrompfad einen Tiefpaß. Eine Richtungsabhängigkeit ist hier nicht gegeben, so daß auf beiden Seiten dieselbe Einheit verwendet werden kann.

Die übertragungstechnische Einheit 10 dient dazu, die für eine herkömmliche Zweidrahtleitung an sich sehr hohe zu übertragende Kapazität dennoch störungsfrei zu übertragen. Hierzu sind gerade in letzter Zeit verschiedene Techniken entwickelt worden, wovon die wichtigsten heute unter dem Begriff (x)DSL zusammengefaßt werden. Dabei steht DSL für Digital Subscriber Line und (x) steht stellvertretend für die verschiedenen Varianten. Im vorliegenden Fall ist letztlich ein übliches PCM30/32-Signal mit 2048 kbit/s zu übertragen, wozu die HDSL-Technik geeignet ist. HDSL steht hier für High bit rate Digital Subscriber Line.

Die Formatierungseinheit 11 dient der Umsetzung des von der übertragungstechnischen Einheit 10 kommenden Summendatenstroms in die einzelnen für die Basisanschlüsse S0(1) bis S0(12) bestimmten Teildatenströme und umgekehrt. Insoweit dient die Formatierungseinheit 11 für jeden Teilnehmer als Teilnehmeranschlußschaltung. Auf der Seite der Vermittlungsstelle kann, wie hier über den mit S12(4Mbit/s) bezeichneten Summenanschluß, der gesamte Summendatenstrom, jedoch in einem an das interne Datenformat der Vermittlungsstelle angepaßten Format, übertragen werden. Auf beiden Seiten werden dabei auch die der Signalisierung dienenden Signale protokollmäßig an eine Übertragung im Zeitmultiplex angepaßt.

Die Ein- und Ausgabeeinrichtung 12 dient vorwiegend Wartungszwecken. Hier können z. B. Statusanzeigen abgerufen werden; es kann auch eine Meldung an die Vermittlungsstelle abgegeben werden, wenn das Gehäuse geöffnet wird.

Die Verschlüsselungseinrichtung 13 kann sowohl der Verschlüsselung des Summensignals als auch verschiedener ausgewählter Teilsignale dienen. Mit der Erfindung als solcher hat dies nichts zu tun, sollte aber in einer solchen Netzabschlußeinheit vorgesehen werden.

Die Stromversorgungseinrichtung 14 dient in bekannter Weise der Stromversorgung der Netzabschlußeinheit.

Der Programmspeicher 15 und die Steuereinrichtung 16 bilden in üblicher Weise die Steuerung der Netzabschlußeinheit.

Die weitere Schnittstelleneinrichtung 17 kann auf der Seite der Vermittlung einen direkten Eingriff, auch in die Steuerung, ermöglichen.

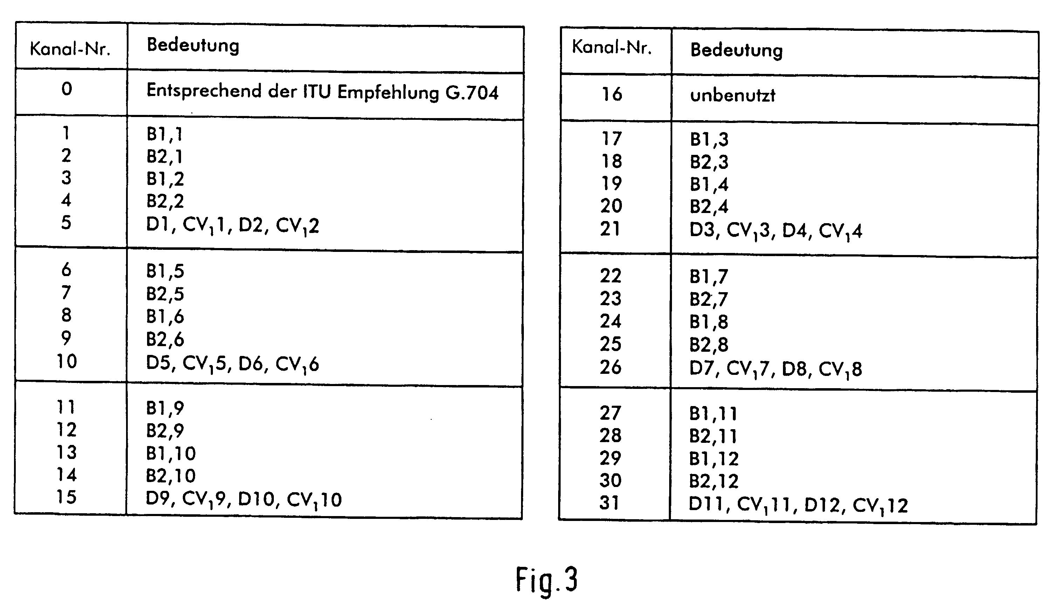

Anhand der Figur 3 wird abschließend noch ein Beispiel für die Kanalzuordnung bei dem erfindungsgemäßen Verfahren gegeben: Es sind insgesamt 12 ISDN-Basisanschlüsse in 30 Kanälen zu übertragen. Dabei werden jeweils zwei Basisanschlüsse auf fünf Kanäle derart abgebildet, daß die zweimal zwei B-Kanäle B1,i und B2,i in die ersten vier dieser fünf Kanäle abgebildet werden und im fünften Kanal einerseits die beiden zugehörigen D-Kanäle Di und andererseits die beiden entsprechenden Steuerkanäle CV1i übertragen werden. Der Kanal 0 wird entsprechend der ITU-T-Empfehlung G.704 verwendet, der Kanal 16 bleibt frei.

## Patentansprüche

1. Verfahren zum Erreichen eines ersten Teilnehmers (TE1) durch einen ersten Netzbetreiber (E), wenn dieser erste Teilnehmer mittels einer Netzabschlußeinheit (NT) über eine Anschlußleitung (B) an einer Vermittlungsstelle (C) eines zweiten Netzbetreibers angeschlossen ist, **dadurch gekennzeichnet, daß** die über die Anschlußleitung dieses ersten Teilnehmers zu führenden Signale beim ersten Netzbetreiber mit Signalen gemultiplext werden, die zu solchen anderen Teilnehmern (TE12) zu führen sind, die ebenfalls vom ersten Netzbetreiber erreichbar sein sollen und die in räumlicher Nähe zum ersten Teilnehmer liegen, daß dieses Multiplexsignal vom ersten Netzbetreiber über eine Anschlußleitung (D) zu einem Verteiler (MDF2) in der Vermittlungsstelle des zweiten Netzbetreibers und von dort, ohne über ein in dieser Vermittlungsstelle befindliches Koppelnetz (SN2) oder daran angeschlossene Teilnehmeranschlußschaltungen (LT) zu führen, über die Anschlußleitung des ersten Teilnehmers zu der in räumlicher Nähe zu diesem ersten Teilnehmer befindlichen Netzabschlußeinheit (NT) geführt wird, daß in dieser Netzabschlußeinheit die gemultiplexten Signale wieder durch Demultiplexen separiert werden, daß die Signale des ersten Teilnehmers von dieser Netzabschlußeinheit weiter zum ersten Teilnehmer geführt werden und daß die Signale der Gegenrichtung entsprechend geführt werden.

2. Anschlußkonfiguration im Teilnehmeranschlußbereich eines ersten Netzbetreibers (E) und eines zweiten Netzbetreibers (C), **dadurch gekennzeichnet, daß** die Anschlußkonfiguration **gekennzeichnet ist durch** eine beim ersten Netzbetreiber vorhandene Multiplexeinrichtung (NT1), mittels derer die für einen ersten Teilnehmer (TE1) bestimmten Signale mit Signalen anderer Teilnehmer (TE12) gemultiplext werden, **durch** eine Verbindung der Multiplexeinrichtung über eine Anschlußleitung (D) mit einem Verteiler (MDF2) in der Vermittlungsstelle (C) des zweiten Netzbetreibers und von dort, ohne über ein in dieser Vermittlungsstelle befindliches Koppelnetz (SN2) oder daran angeschlossene Teilnehmeranschlußschaltungen (LT) zu führen, über eine Anschlußleitung (B) mit einer in räumlicher Nähe zum ersten Teilnehmer befindlichen Netzabschlußeinheit (NT), **durch** einen in der Netzabschlußeinheit vorhandenen Demultiplexer, **durch** eine Verbindung des ersten Teilnehmers über eine Anschlußleitung (S0) mit der Netzabschlußeinheit und **durch** das Vorhandensein eines Multiplexers in der Netzabschlußeinheit für die Signale der Gegenrichtung und einer Demultiplexeinrichtung beim ersten Netzbetreiber.

3. Verfahren nach Anspruch 1, **dadurch gekennzeichnet, daß** beim ersten Netzbetreiber und in der Netzabschlußeinheit die der Signalisierung dienenden Signale protokollmäßig an eine Übertragung im Zeitmultiplex angepaßt werden.

4. Verfahren nach Anspruch 1, **dadurch gekennzeichnet, daß** die Übertragung der gemultiplexten Signale in (x)DSL-Technik erfolgt.

## Claims

1. Method of reaching a first subscriber (TE1) by a first network operator (E), if this first subscriber is connected via a subscriber line (B), by means of a network termination unit (NT), to a switching centre (C) of a second network operator, **characterized in that** the signals to be fed via the subscriber line of this first subscriber are multiplexed on the premises of the first network operator with signals which are to be fed to those other subscribers (TE12) who are also intended to be reachable from the first network operator and which are spatially adjacent to the first subscriber, that this multiplex signal is fed by the first network operator via a subscriber line (D) to a distribution frame (MDF2) in the switching centre of the second network operator, and from there, without being fed via a switching network (SN2) in this switching centre or subscriber access circuits (LT) which are connected to it, via the subscriber line of the first subscriber to the network termination unit (NT) which is adjacent to this first subscriber, that in this network termination unit the multiplexed signals are separated again by demultiplexing, that the signals of the first subscriber are fed onward from this network termination unit to the first subscriber, and that the signals in the opposite direction are fed correspondingly.

2. Connection configuration in the local loop of a first network operator (E) and a second network operator (C), **characterized in that** the connection configuration is **characterized by** a multiplexing device (NT1) which exists on the premises of the first network operator, and by means of which the signals which are intended for a first subscriber (TE1) are multiplexed with signals of other subscribers (TE12), through a connection of the multiplexing device via a subscriber line (D) to a distribution frame (MDF2) in the switching centre (C) of the second network operator, and from there, without being fed via a switching network (SN2) in this switching centre or subscriber access circuits (LT) which are connected to it, via a subscriber line (B) to a network termination unit (NT) which is spatially adjacent to the first subscriber, through a demultiplexer which exists in the network termination unit, through a connection of the first subscriber via a subscriber line (SO) to the network termination unit, and through the existence of a multiplexer in the network termination unit for the signals of the opposite direction and a demultiplexing device on the premises of the first network operator.

3. Method according to Claim 1, **characterized in that** in the case of the first network operator and in the network termination unit, the signals which are used for signalling are adapted in protocol terms for transmission in time multiplex.

4. Method according to Claim 1, **characterized in that** the multiplexed signals are transmitted in (x)DSL technology.

## Revendications

1. Procédé pour joindre un premier abonné (TE1) par un premier exploitant de réseau (E) lorsque ce premier abonné est raccordé au moyen d'une unité de terminaison de réseau (NT) par une ligne de raccordement (B) à un central de commutation (C) d'un second exploitant de réseau, **caractérisé en ce que** les signaux à guider par la ligne de raccordement de ce premier abonné sont multiplexés chez le premier exploitant de réseau avec des signaux qui doivent être guidés vers d'autres abonnés (TE12) qui doivent être joignables également à partir du premier exploitant de réseau et se situent à proximité dans l'espace du premier abonné, **en ce que** le signal de multiplexage est guidé du premier exploitant de réseau par une ligne de raccordement (B) à un répartiteur (MDF2) au central de commutation du deuxième exploitant de réseau et de là, sans guidage au moyen d'un réseau de couplage (SN2) se trouvant dans ce central de commutation ou de circuits de branchement d'abonnés (LT) raccordés au réseau, par la ligne de raccordement du premier abonné à l'unité de terminaison de réseau (NT) se trouvant à proximité dans l'espace de ce premier abonné, **en ce que** les signaux multiplexés sont séparés à nouveau dans cette unité de terminaison de réseau par un démultiplexage, **en ce que** les signaux du premier abonné sont guidés de cette unité de terminaison de réseau à nouveau vers le premier abonné et **en ce que** les signaux sont guidés en fonction du sens inverse.

2. Configuration de raccordement dans la zone de raccordement d'abonnés d'un premier exploitant de réseau (E) et d'un second exploitant de réseau (C), **caractérisée en ce que** la configuration de raccordement est **caractérisée par** un appareil de multiplexage (NT1), existant chez le premier exploitant de réseau, au moyen duquel les signaux destinés à un premier abonné (TE1) sont multiplexés avec des signaux d'autres abonnés (TE12), par une liaison de l'appareil de multiplexage au moyen d'une ligne de raccordement (D) avec un répartiteur (MDF2) au central de commutation (C) du second exploitant de réseau et de là, sans guidage au moyen d'un réseau de couplage (SN2) se trouvant dans ce central de commutation ou de circuits de raccordement d'abonnés (NT) raccordés à ce réseau, par une ligne de raccordement (B) avec une unité de terminaison de réseau (NT) se trouvant à proximité dans l'espace du premier abonné, par un démultiplexeur présent dans l'unité de terminaison de réseau, par une liaison du premier abonné via une ligne de raccordement (SO) avec l'unité de terminaison de réseau et par la présence d'un multiplexeur de l'unité de terminaison de réseau pour les signaux de la direction inverse et dans un appareil de démultiplexage chez le premier exploitant de réseau.

3. Procédé selon la revendication 1, **caractérisé en ce que**, chez le premier exploitant de réseau et dans l'unité de terminaison de réseau, les signaux servant à la signalisation sont adaptés au niveau du protocole à une transmission en multiplexage temporel.

4. Procédé selon la revendication 1, **caractérisé en ce que** la transmission des signaux multiplexés s'effectue en technique (x)DSL.
